# EUROPEAN PATENT APPLICATION

(11) **EP 1 839 916 A2**
(43) Date of publication of application: **03.10.2007**
(21) Application number: 07105152.8
(22) Date of filing: 28.03.2007
(51) Int. Cl.: B60C 27/14

(54) **Securing device for snow chains**

(30) Priority: 30.03.2006 IT MI20060609
(71) Applicant: MAGGI CATENE S.p.A., 23854 Olginate (LECCO) (IT)
(72) Inventor: Maggi, Giuseppe, 23900, Lecco (IT); Bouvier, Jean-Pierre, 1070, Piudoux-Gare (CH)
(74) Representative: Faggioni, Carlo Maria

(57) **Abstract**

A securing device for a snow chain is disclosed, of the type comprising a gripper body, which may close petal-wise on a vehicle rim bolt, and a first socket-shaped body (2) within which said gripper body (1) is axially slidable by means of a manoeuvring member, the interaction between a mouth (2a) of said first socket-shaped body (2) and the gripper body (1) causing the opening/closure of the device around the bolt, and furthermore at least a second socket-shaped body (9), coaxially slidable with respect to the first socket-shaped body and itself provided with a mouth (9a) intended to interact with said gripper body (1), the manoeuvring member being capable of imparting a traction on said gripper body (1) to produce a relative axial movement at least with both the first and the second socket-shaped body (2, 9).

## Description

### Background

### Field of the Invention

The present invention concerns a securing device for a snow chain, in particular a snow chain of the automatic fitting type.

As known, in the field of snow chains for road vehicles so-called automatic-fitting models exist, i.e. snow-chains which are attached to the front side of the wheel rim and which are then automatically pushed onto the wheel by elastic means. A typical example of this type of chain is the one successfully marketed by the Applicant under the trademark TRAK^{®}.

Automatic-fitting snow chains are attached to the wheel rim by various means: one of these, which is particularly effective, is the one shown in EP 1 562 764 in the name of the same Applicant. In this specification, a securing device consists of a housing socket wherefrom jaw-shaped members protrude - which consist of a plurality of gripper flaps kept together by respective elastic means - intended to be tightened to a rim bolt. The manoeuvring member, which may be actuated by the user, is shaped as a handy knob, whose rotation establishes a relative sliding movement between the jaw-shaped members and the housing socket, which movement causes the petal-wise closure of the jaw members on the rim bolt.

The device thus obtained has remarkable advantages in terms of handiness, speed of fitting and universality.

The Applicant, however, has realised that the design of this device is quite demanding, since the sizes of the bolts used on vehicles vary across a rather wide range (typically from ⌀17 mm to ⌀21 mm) and it is hence very difficult to achieve full and ever-effective universality. The compromises that must be reached end up making such device not always ideal for extreme bolt sizes.

The object of the present invention is hence to provide such a securing device which overcomes the disadvantages set forth above, i.e. a device which can be firmly secured to any kind of bolt found on vehicle rims in as wide a size range as possible.

### Summary of the Invention

Such object is achieved through a device as described in its essential features in the accompanying main claim.

In particular, a securing device for a snow chain of the type comprising a gripper body, which may close "petal-like" on a bolt of a vehicle rim, and a first socket-shaped body within which said gripper body is axially slidable by means of a manoeuvring member, the interaction between the mouth of such socket-shaped body and the gripper body resulting in the closure of the device on the bolt, wherein a second socket-shaped body is also provided, which is coaxial to the first socket-shaped body and is itself provided with a mouth intended to interact with the gripper body, and wherein the manoeuvring member is capable of imparting a traction on the gripper body to create a relative axial movement with both the first and the second socket-shaped body.

Other inventive aspects of the invention are described in the dependent claims.

### Brief Description of the Drawings

Further features and advantages of the device according to the invention will in any case be more evident from the following detailed description of a preferred embodiment of the same, given by way of example and illustrated in the accompanying drawings, wherein:

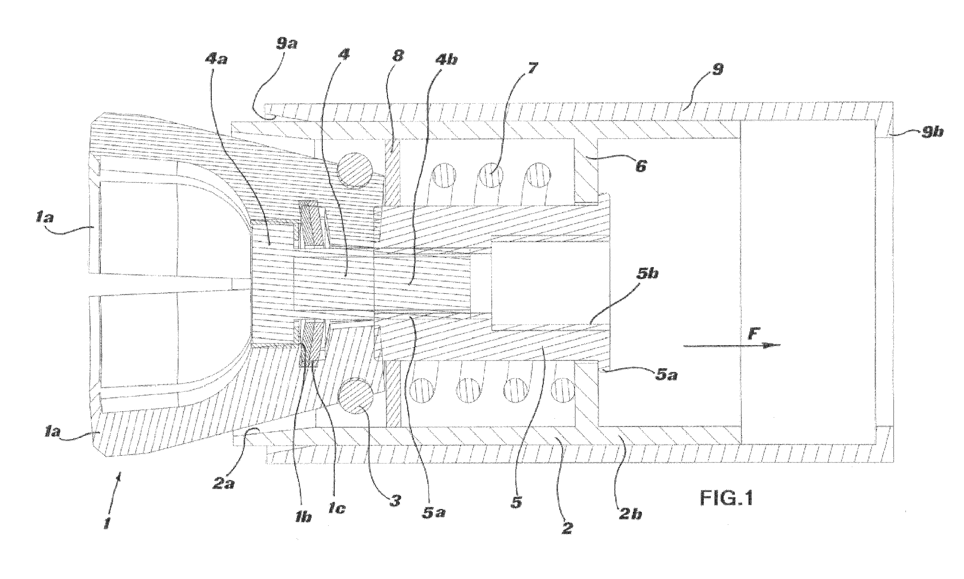

fig. 1 is a longitudinal section view of the device according to the invention;

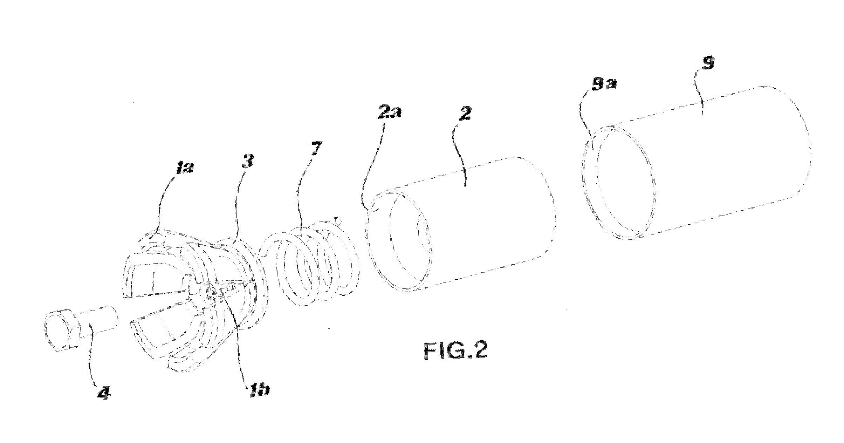

fig. 2 is an exploded view, with parts removed, of a device according to the invention; and
figs. 3a to 3c are perspective views of the device according to the invention in three different closure conditions.

### Best Way of Carrying out the Invention

A securing device for a snow chain generally consists of a clamping gripper 1 mounted axially slidable within a first socket-shaped body 2.

Gripper 1 has, in a way known per se, a plurality of mutually independent jaws or gripper members 1a, circumferentially mounted around a cup member 1b, which keeps them axially integral in cooperation with a washer 1c, and there they are maintained in a radial position, in a spread-apart condition, by an elastic ring 3, typically an O-ring.

A bolt 4, axially mounted between gripper elements 1a, represents the manoeuvring member for imparting an axial traction on the gripper body and causing a relative axial sliding between gripper 1 and the first socket-shaped body 2.

For such purpose, head 4a of bolt 4 is housed inside cup member 1b and threaded stem 4b protrudes from the bottom of gripper 1 engaging with threaded hole 5a of a bush 5. Said bush has another portion of threaded hole 5b - or other suitable fitting means - by which it engages with an external manoeuvring member (not shown), which may be actuated by the user (for example the knob illustrated in EP 1 562 764) for imparting a traction according to arrow F on gripper 1.

The portion of threaded hole 5b may simply be the extension of hole 5a or, as shown, a larger threaded hole.

The first socket-shaped body 2 has a bevelled mouth 2a, flaring outwards, capable of cooperating with the outer surface of gripper elements 1a, during a relative axial movement introducing gripper 1 further into socket-shaped body 2, which gripper hence closes "petal-like" on the bolt of a rim.

The first socket-shaped body 2 further comprises a drilled bottom 6, through which bush 5 is freely slidable. Socket 2 extends further even beyond this bottom 6, with a liner 2b whose function will be illustrated further on.

Bush 5 and the gripper 1 associated therewith are mounted so as to be pushed outwards of socket 2 (keeping the jaws mutually apart), towards the mouth of said socket: for such purpose there is provided an elastic spring 7 which lies between bottom 6 and a washer 8 arranged at the bottom of gripper 1. According to the embodiment shown, since gripper elements 1a have a base with a larger diameter than bush 5, washer 8 may be simply slid onto bush 5 because it is kept in working position - i.e. against the base portion of jaws 1a - by the very elastic thrust of spring 7.

In order to prevent the spring from fully ejecting the gripper out of socket 2, bush 5 further has a circular flange 5a at its distal end, intended to abut with the side of bottom 6 opposite to the one supporting spring 7: thereby the end of stroke of the removal movement of the gripper from socket 2 is determined.

According to the invention, a second socket body 9 is further provided, which properly and accurately houses the first socket-shaped body 2 with which a coupling is established with at least a relationship of mutual, free, axial sliding; also this second socket 9 preferably has a bevelled, outwardly-flaring mouth 9a.

Also the back end of the second socket-shaped body is made of a bottom 9b with apertures. Thereby, bottom 9b determines the end of stroke of the first socket 1 in the direction of arrow F, but it can be run across longitudinally by the external manoeuvring member (not shown) intended to engage with bush 5, for example in threaded hole 5b.

In particular, the end of stroke in the direction of arrow F is determined when the peripheral edge of liner 2b abuts with bottom 9b.

Due to this arrangement, the device can be assembled in a particularly simple manner. As a matter of fact, it is sufficient to introduce bush 5 into socket 2 from the back side, through bottom 6 with apertures and, subsequently, to arrange spring 7 around it. After which, working from the front side, gripper body 1 is introduced from the mouth 2a of socket 2, which body has previously been assembled with bolt 4 and washer 8. The screwing of bolt 4 into bush 5 results in the mutual consolidation of these components and the simultaneous compression of spring 7, which thereby keeps gripper body 1 protruding from socket 2.

Finally, the first socket 2 is introduced in the second socket 9 and made to slide within the same until it engages with the external manoeuvring member.

The above description being provided, the operation of the device is self-explanatory.

The user, in order to install the securing device, arranges gripper body 1 in engagement with the bolt of a vehicle rim and hence acts on the external manoeuvring member. This last operation creates a relative movement between the second socket body 9 and bush 5, resulting in socket-shaped body 9 being pushed towards gripper body 1.

Thereby, bevelled mouth 9a comes closer to the outer end of gripper elements 1a.

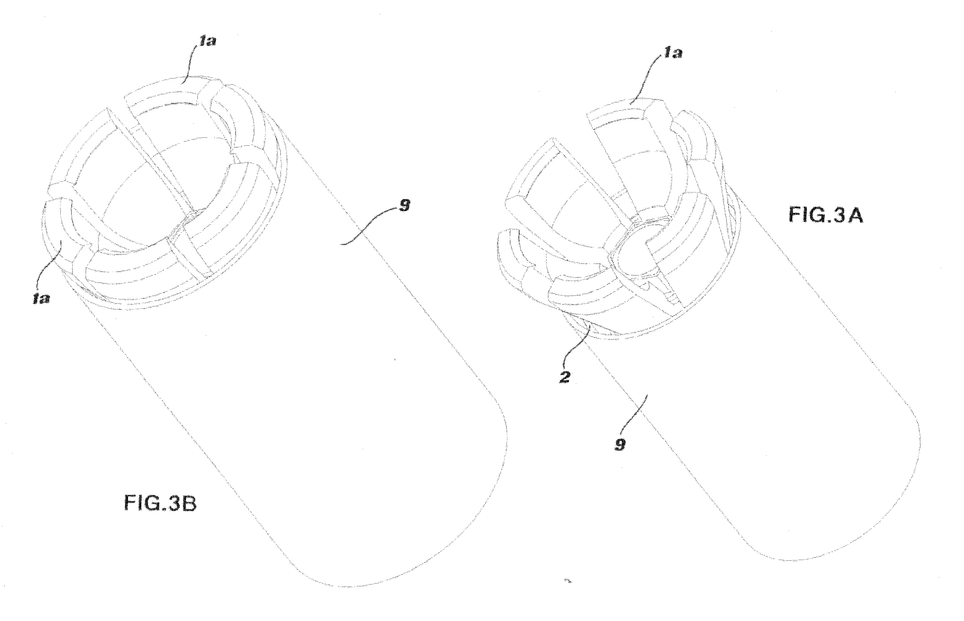

If the bolt is sufficiently large (for example ø21), elements 1a remain widely apart, close to the rim bolt, and hence mouth 9a ends up abutting with the outer surface (fig. 3B) of said elements. Such abutment, which occurs with a significant force imparted by the manoeuvring member, through the inclined surface of mouth 9a, produces a transversal (radial) thrust which tightens firmly gripper elements 1a against the head of the underlying bolt.

If the bolt instead is smaller (for example ø17), elements 1a can close towards each other to a bigger extent. Therefore the mouth of outer socket 9 abuts with the outer surface of elements 1a and pushes the same, further closing said elements only against the elastic reaction of ring 3. Such run continues until bottom 9b abuts with the peripheral edge of liner 2b.

At this point, further operation of the manoeuvring member causes the sliding also of the first socket-shaped body 2 on the gripper body: drilled bottom 6 hence begins to slide on bush 5, against the elastic action of spring 7.

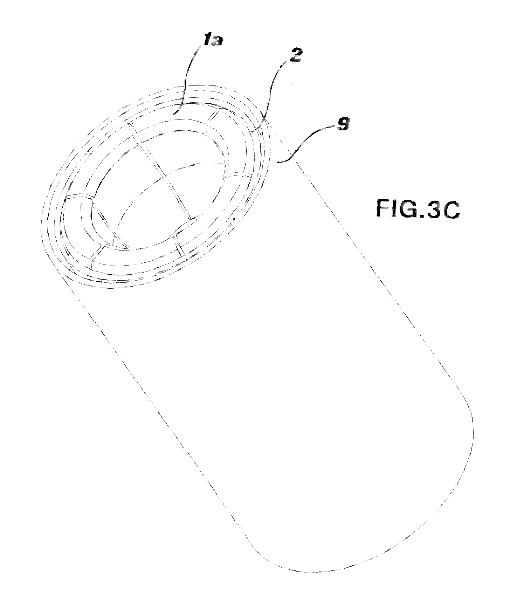

In this case this further relative movement brings bevelled mouth 2a - having a smaller diameter than bevelled mouth 9a - to abut with gripper elements 1a (fig. 3C), until it fully tightens gripper 1 on the smaller bolt head.

The special arrangement with two bevelled mouths 2a and 9a, of the two coaxial and mutually sliding socket bodies 2 and 9, respectively, provides the desired progressiveness of action of the same gripper body, which allows to firmly secure the device with bolts belonging to a wide range of sizes, typically from ⌀17 mm to ⌀ 21 mm.

As can be understood, hence, the object set forth in the preliminary remarks has been fully achieved.

It is intended, however, that the invention is not to be considered limited to the specific embodiment illustrated above, which is to be intended as a non-limiting example, but that a number of modifications are possible, all within the reach of a person skilled in the field, without departing from the scope of protection of the invention, as defined in the following claims.

As a matter of fact, it is possible to conceive different arrangements to couple the bush with the manoeuvring member, as well as to establish the relative axial movement between the three main components: the gripper body and the two socket bodies.

Furthermore, the arrangement of the gripper body can also be different, as is clearly illustrated also in EP 1 562 764.

## Claims

1. Securing device for a snow chain, of the type comprising a gripper body, apt to close petal-wise on a motorvehicle rim bolt, and a first socket-like body (2) within which said gripper body (1) is axially slidable by means of a manoeuvring member, the interaction between a mouth (2a) of said first socket-shaped body (2) and the gripper body (1) causing the opening/closing of the gripper body on the bolt, **characterised in that** it further comprises at least a second socket-shaped body (9), coaxially slidable with respect to the first socket-shaped body (2) and itself provided with a mouth (9a) intended to interact with said gripper body (1) and **in that** said manoeuvring member is capable of imparting a traction on said gripper body (1) to create a relative axial movement at least with both the first and second socket-shaped body (2, 9).

2. Device as claimed in claim 1), wherein spring means (7) are provided at least between said first socket-shaped body (2) and said gripper body (1) to push said gripper body into a protruding condition.

3. Device as claimed in claim 1) or 2), wherein said second socket-shaped body (9) is mounted externally slidable with respect to the first one (2).

4. Device as claimed in claim 3), wherein said second socket-shaped body has an end drilled bottom (9b) which determines a relative end of stroke of the first socket-shaped body (2) within the second socket-shaped body (9) and allows the axial crossing of said manoeuvring member.

5. Device as claimed in claim 3) or 4), wherein said first socket-shaped body (2) has an intermediate drilled bottom (6) within which a bush (5) slidingly engages, said bush (5) being axially integral with said gripper body (1) and having a bottom flange (5a) intended to abut with said intermediate bottom (6) with apertures.

6. Device as claimed in claim 5), wherein said spring means are arranged between said intermediate bottom (6) with apertures and abutment means (8) of the gripper body (1).

7. Device as claimed in claim 6), wherein said abutment means are in the form of a washer (8).

8. Device as claimed in any one of claims 5) to 7), wherein said bush (5) is attached to gripper body (1) by means of a bolt (4) .

9. Device as claimed in any one of the preceding claims, wherein said mouths (2a, 9a) are flared outwards.
